# EUROPÄISCHE PATENTANMELDUNG

(11) **EP 1 188 515 A2**
(43) Veröffentlichungstag der Anmeldung: **20.03.2002**
(21) Anmeldenummer: 01121675.1
(22) Anmeldetag: 14.09.2001
(51) Int. Cl.: B24B 7/18, B24B 55/10

(54) **Absaugvorrichtung für Bodenbearbeitungsgeräte**

(30) Priorität: 14.09.2000 DE 20016085 U
(71) Anmelder: Janser, Maximilian, 71135 Ehningen (DE)
(72) Erfinder: Janser, Maximilian, 71135 Ehningen (DE)
(74) Vertreter: Patentanwälte Ruff, Wilhelm, Beier, Dauster & Partner

(57) **Zusammenfassung**

Die Erfindung betrifft eine Absaugvorrichtung für Bodenbearbeitungsgeräte, insbesondere für Einscheiben-Bodenbearbeitungsgeräte.

Bei einer Absaugvorrichtung für ein Bodenbearbeitungsgerät, insbesondere ein Einscheiben-Bodenbearbeitungsgerät folgt eine Absaugung des abgetragenen Oberflächenmaterials über wenigstens zwei Absaugkanäle. Die beiden Absaugkanäle sind auf einander diametral gegenüberliegenden Seiten des Bodenbearbeitungsgerätes angeordnet.

## Beschreibung

Die Erfindung betrifft eine Absaugvorrichtung für Bodenbearbeitungsgeräte, insbesondere für Einscheiben-Bodenbearbeitungsgeräte.

Bei derartigen Bodenbearbeitungsgeräten erfolgt meistens ein Abtrag von der Oberfläche des bearbeiteten Bodens. Bei der Bodenoberfläche kann es sich dabei insbesondere um einen Estrichboden, der zum Zwecke der weiteren Bearbeitung aufgeraut wird - beispielsweise damit eine Verklebung eines darauf anzubringenden weiteren Bodenbelags, beispielsweise eines Teppichs möglich wird - oder um einen Parkettboden, insbesondere Naturholz-Parkettboden, handeln, dessen Oberfläche nach dem Verlegen des Parkettbodens in mehreren Arbeitsgängen abgeschliffen wird.

Bei solchen Bodenbearbeitungen weist das Bodenbearbeitungsgerät meistens einen Drehteller auf, der um eine vertikal stehende Drehachse gedreht wird und an dessen Unterkante die Bearbeitungswerkzeuge anordenbar oder angeorndet sind. Bei den Bearbeitungswerkzeugen kann es sich dabei um Schleifblätter oder aber um Bearbeitungs- und Fräßköpfe und dergleichen handeln.

Bei der Bearbeitung des Bodens erfolgt dabei ein Vorschub des Bodenbearbeitungsgerätes in einer Hauptarbeitsrichtung. Daneben kann zusätzlich eine von der Hauptarbeitsrichtung abweichende, quer verlaufende weitere Bewegung überlagert werden. Die Hauptarbeitsrichtung wird dabei i.d.R. durch das Arbeitsgerät bestimmt. Zum Führen des Arbeitsgerätes durch den Bediener ist ein Gestänge vorgesehen, wobei über das Gestänge von dem Bediener sowohl der Vorschub in der Hauptbearbeitungsrichtung als auch in der quer dazu liegenden Arbeitsrichtung eingebracht werden "kann, wobei diese Querbewegung auch durch die Kräfte zwischen dem sich drehenden Drehteller des Bodenarbeitungsgerätes und der Oberfläche des Bodens mitinduziert sein kann.

Während des Bearbeitungsvorganges wird von der Oberfläche des Bodens Oberflächenmaterial abgetragen. Das abgetragene Oberflächenmaterial wird aufgrund der Rotation des Drehtellers in Richtung auf dessen radial dem Drehteller umgebenden äußeren Gehäuserand transportiert. Damit sich das abgetragene Bodenmaterial nicht innerhalb des Gehäuses aufstaut und aus diesem Grunde eine Verschlechterung der Bearbeitungsqualität der Bodenoberfläche zur Folge hat und schließlich durch das Aufstauen ein Weiterarbeiten unmöglich wird, muß das abgetragene Oberflächenmaterial unter dem Gehäuserand des Bearbeitungsgerätes hinaustransportierbar sein. Darüber hinaus ist es aufgrund der variablen Höhe der auf dem Drehteller anbringbaren Arbeitsgeräte nicht möglich, den Rand des Gehäuse des Bodenbearbeitungsgerätes dichtend am Boden anliegend auszubilden. Unterhalb des Randes des Gehäuses kann daher das abgetragene Oberflächenmaterial nach außen gelangen. Damit das nach außen dringende, abgetragene Oberflächenmaterial nicht als Staub in die Luft gelangt und auch die umliegenden Bereiche des Bodens bedeckt, die im Arbeitsgang bearbeitet werden und diesen stören könnten, ist es vorteilhaft, wenn eine Absaugung für das abgetragene Oberflächenmaterial erfolgt.

Zur Durchführung dieser Absaugung ist es bekannt, am Bodenbearbeitungsgerät eine Absaugvorrichtung anzubringen. Dabei sind die Absaugvorrichtungen meist als zusätzlich am Bodenbearbeitungsgerät anbringbare, als gesonderter Zubehör für sich gehandelte Absaugvorrichtungen ausgebildet. Derartige, allgemein bekannte Absaugvorrichtungen weisen häufig zwei Absaugkanäle auf, damit Menge des abgetragenen Oberflächenmaterials zuverlässig bewältigt werden kann. Dabei ist es allgemein üblich, die Absaugkanäle symmetrisch zur Hauptarbeitsrichtung hinter dem Drehteller so anzuordnen, daß die Absaugbereiche seitlich nicht über die Außenkonturen hinausragen. Dies wird gemacht, damit eine möglichst randbündige Bodenbearbeitung durch das Bodenbearbeitungsgerät möglich ist.

Nachteilig bei einer solchen Anordnung ist es, daß die von den beiden Absaugkanälen aufzunehmende Charge des abgetragenen Oberflächenmaterials äußerst ungleich ist, da das aufzunehmende Material des Absaugkanals einem wesentlich größeren Winkelbereich des Drehkreises des Drehtellers zugeordnet ist, als der andere Absaugkanal.

Aufgabe ist es daher, die Abfuhr des abgetragenen Oberflächenmaterials weiter zu verbessern.

Diese Aufgabe wird bei Zugrundeliegen einer gattungsgemäßen Absaugvorrichtung erfindungsgemäß durch das kennzeichnende Merkmal des ersten Schutzanspruches gelöst.

Bei einer Absaugvorrichtung für ein Bodenbearbeitungsgerät, insbesondere ein Einscheiben-Bodenbearbeitungsgerät folgt eine Absaugung des abgetragenen Oberflächenmaterials über wenigstens zwei Absaugkanäle. Die beiden Absaugkanäle sind auf einander diametral gegenüberliegenden Seiten des Bodenbearbeitungsgerätes angeordnet.

Dabei hat die Ausbildung der Erfindung mit den beiden diametral einander gegenüberliegenden Absaugkanälen nicht nur den Vorteil, daß jedem der beiden Absaugkanäle ein gleicher Winkelbereich des Drehtellers zugeordnet ist, dessen abgetragenes Oberflächenmaterial über diesen Absaugkanal entsorgt werden muß. Darüber hinaus ist durch die symmetrische Ausbildung der Aubsaugkanäle über den Drehkreis des Drehtellers hinweg die Ausbildung eines gleichmäßigen Dralles der Luftströmung im Bodenbearbeitungsgerät sichergestellt, die die Abfuhr des abgetragenen Oberflächenmaterials weiter fördert.

Dabei ist es nicht nur möglich, zwei Absaugkanäle vorzusehen, die einander diametral gegenüberliegend angeordnet sind, es ist auch möglich, insgesamt vier Absaugkanäle vorzusehen, wobei zwischen den vier Absaugkanälen jeweils ein Winkel von 90° gebildet ist, so daß zwei Paare einander diametral gegenüberliegender Absaugkanäle vorgesehen sind. Gemäß bevorzugter Ausgestaltung der Erfindung sind jedoch genau zwei einander diametral gegenüberliegende Absaugkanäle vorgesehen. Dabei entspricht es einer weiterführenden vorteilhaften Ausgestaltung der Erfindung, wenn die genau zwei Absaugkanäle unter einem Winkel von ungefähr 45° zur Hauptarbeitsrichtung des Bodenbearbeitungsgerätes angeordnet sind. Dabei ist der 45° Winkel vorzugsweise in Drehrichtung des Drehtellers vorgesehen. Dies hat den Vorteil, dass die Absaugkanäle in dem Bereich angeordnet sind, in dem sie am wenigsten die Annäherung des Arbeitsgerätes an ein Hindernis, wie eine Wand oder eine Ecke, behindern.

Gemäß anderer weiterführender Ausgestaltung der Erfindung ist für die Absaugrichtung ein in vertikaler Richtung schwimmend gehaltener Luftleitring vorgesehen, der vorzugsweise dichtend an der Bodenfläche anliegt und das Gehäuse des Bodenbearbeitungsgerätes umgibt. Dabei kann vorteilhafter Weise zur dichtenden Anlage des Luftleitrings auf der Bodenfläche ein die Aufstandsfläche des Luftleitrings auf der Bodenfläche bildender Bürstenring vorgesehen sein. Außerhalb des Bürstenringes ist zur fluiddichten Ausbildung der Anlage ein außerhalb des Bürstenrings ausgebildeter Dichtring vorgesehen, wobei der Dichtring vorzugsweise als textile Materialbahn ausgebildet ist. Diese textile Materialbahn kann insbesondere durch eine der beiden Komponenten eines Klettverschlusses gebildet sein.

Weiter vorteilhaft sind Ausgestaltungen der Absaugvorrichtungen, bei dem die Absaugkanäle in den Luftleitring münden und in der Mündung ein Austrittschlitz im Luftleitring vorgesehen ist. Der Luftleitschlitz ertstreckt sich dabei über einen radialen Winkelbereich des Luftleitrings. Dieser Winkelbereich erstreckt sich gemäß vorteilhafter Ausgestaltungen insbesondere über 45° bis 90° und liegt insbesondere bei ungefähr 70°. Gemäß weiterer vorteilhafter Ausgestaltung sind die Austrittsschlitze in vertikaler Richtung gesehen nur wenige mm hoch - beispielsweise zwischen 2 und 10mm, insbesondere ca. 5mm - und vorzugsweise spaltförmig ausgebildet. Es kann sich bei den Austrittschlitzen insbesondere um einen bürstenfreien Abschnitt des Luftleitrings handeln, wobei der Austrittschlitz im Bereich des Luftleitringes vorzugsweise der Bürstenhöhe entspricht. Die spaltförmige Ausgestaltung der Austrittschlitze hat den Vorteil, daß im Bereich der Austrittschlitze eine hohe Strömungsgeschwindigkeit der Luft gegeben ist, so daß das abgetragene Oberflächenmaterial zuverlässig mit der Luftströmung mitgerissen wird. Da es sich bei dem abgetragenen Oberflächenmaterial meist um Stäube oder äußerst kleine Späne handelt, ist die spaltförmige Ausbildung des Austrittschlitzes, der insbesondere ca. 5mm hoch ist, ausreichend, um eine Verstopfung des Austrittschlitzes durch sich dort festsetzende Späne zuverlässig zu verhindern.

Gemäß weiterer Ausgestaltung der Erfindung münden die Austrittsschlitze in radial außerhalb des Leitrings gelegene Umlenkkammern. Gemäß vorteilhafter Gestaltung der Umlenkkammern, sind diese sich in Drehrichtung des Drehtellers des Bodenbearbeitungsgerätes radial vertiefend ausgebildet. Die Umlenkkammern sind dabei insbesondere im wesentlichen dreiecksförmig gestaltet, wobei jeweils ein Schenkel der Dreiecksform der Umlenkkammern durch den Austrittsschlitz und die beiden anderen Schenkel durch eine die Außenkontur der Absaugvorrichtung bildende Wandung ausgebildet ist. Dabei ist eine dichtende Anlage der Wandung an der Bodenfläche vorgesehen, die insbesondere durch die in den anderen Bereich den Luftleitring dichtend abschließende textile Materialbahn gebildet ist, wobei darüber hinaus auch im Bereich der Wandung die Möglichkeit besteht, an der Unterseite, zur Bodenfläche hin, Borsten vorzusehen.

Dabei ist gemäß einer weiterführenden Ausgestaltung der Erfindung die radiale Tiefe der Umlenkkammern zum tiefsten Punkt so groß, daß sie dem Durchmesser eines von der Umlenkkammer vertikal nach oben abragenden Rohrabschnittes entspricht. Dabei ist der Punkt der größten Drehrichtung des Drehtellers gesehen im hintersten Punkt des Austrittsschlitzes ausgebildet. Dabei ist die Umlenkkammer nach oben durch einen sich zwischen Luftleitring und Wandung der Umlenkkammer sich im wesentlichen horizontal erstreckenden Deckel abgeschlossen.

Es ist gemäß einer weiterführenden Ausgestaltung der Erfindung möglich, daß in den Umlenkkammern jeweils ein Luftleitblech angeordnet ist, wobei das Luftleitblech zumindest unterhalb der Mündung des vertikal abragenden Rohabschnittes vorgesehen ist. Dabei ist das Luftleitblech radial nach außen ansteigend ausgebildet und die durch den Austrittsschlitz in die Umlenkkammer eintretende Luftströmung gleitet oberhalb des Luftleitbleches in den vertikal abragenden Rohabschnitt. Dabei kann das Luftleitblech auch im wesentlichen der Dreiecksform der Umlenkkammer entsprechen und sich bis in die Nähe des Austrittschlitzes erstrecken. Das Luftleitblech dient insbesondere dazu, die Luftströmung zu dem von der Umlenkkammer wegführenden Rohabschnitt umzulenken. Es sorgt dafür, daß das abgetragene Oberflächenmaterial zuverlässig aus der Umlenkkammer weggeführt werden kann. Damit sich nach dem Arbeitsende auf dem Luftleitblech kein abgetragenes Oberflächenmaterial ansammelt, das dann beim Transport des Bodenbearbeitungsgerätes verloren geht, ist es vorteilhaft, wenn das Luftleitblech so schräg stehend bzw. gekrümmt ausgebildet ist, daß sich auf ihm kein Oberflächenmaterial dauerhaft ablagern kann sondern nach Ende der Absaugung durch den Absaugkanal von diesem wieder hinuntergleitet und auf den darunterliegenden Boden fällt.

Gemäß einer weiteren vorteilhaften Ausgestaltung der Erfindung erfolgt die Absaugung des abgetragenen Oberflächenmaterials durch ein vom Bodenbearbeitungsgerät getrennten Staubsauger. Dabei kann insbesondere ein vom Staubsauger zum Bodenbearbeitungsgerät führender Saugschlauch vorgesehen sein. Der Saugschlauch trennt sich dann am Bodenbearbeitungsgerät in die unterschiedlichen Absaugkanäle auf, wobei jeder der Absaugkanäle einem Austrittsschlitz zugeordnet ist. Im Staubsauger wird das abgetragene Material in Staubsäcken- bzw. -filtern zurückgehalten.

Gemäß einer weiteren Ausgestaltung der Erfindung ist zwischen dem Luftleitring und dem Gehäuse des Bodenbearbeitungsgerätes eine Dichtmanschette vorgesehen. Diese kann insbesondere mittels eines Spannverschlusses dichtend an dem Gehäuse des Bearbeitungsgerätes gehalten werden. Die Dichtmanschette sorgt insbesondere vorzugsweise für die in vertikaler Richtung schwimmende Lagerung des Luftleitrings am Gehäuse. Die Dichtmanschette ist dabei fluiddicht ausgebildet, damit kein Nebenluftstrom erzeugt wird. Hierfür kann insbesondere ein textiles Material verwendet werden, dessen Poren durch Gummierung o.ä. verschlossen wurden, so daß kein Luftdurchtritt mehr durch die Dichtmanschette möglich ist. Die dichtende Anlage der Dichtmanschette an dem Luftleitring kann beispielsweise durch Verschweissen oder aber ebenfalls durch entsprechende Spannverschlüsse erfolgen.

Gemäß einer weiteren Ausgestaltung der Erfindung ist es möglich, daß zwischen dem Gehäuse des Bodenverarbeitungsgerätes und dem Luftleitring Führungsmittel ausgebildet sind. Durch die Führungsmittel werden die diametral einander gegenüberliegenden Absaugkanäle vorzugsweise um einen Winkel von ca. 45° zur Hauptarbeitsrichtung des Bodenbearbeitungsgerätes ausgerichtet.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Im übrigen ist die Erfindung nachfolgend noch anhand des in der Zeichnung dargestellten Ausführungsbeispieles näher erläutert; dabei zeigt:
- Fig. 1: schematische Darstellung eines seitlichen Schnittes durch ein Bodenbearbeitungsgerät und eine Absaugvorrichtung;
- Fig. 2: in schematischer Darstellung den Schnitt in horizontaler Richtung durch das Bodenbearbeitungsgerät mit einer erfindungsgemäßen Absaugvorrichtung in der Ebene des Drehtellers und
- Fig. 3: die Seitenansicht eines Luftleitringes über 360° in geöffneter Darstellung.

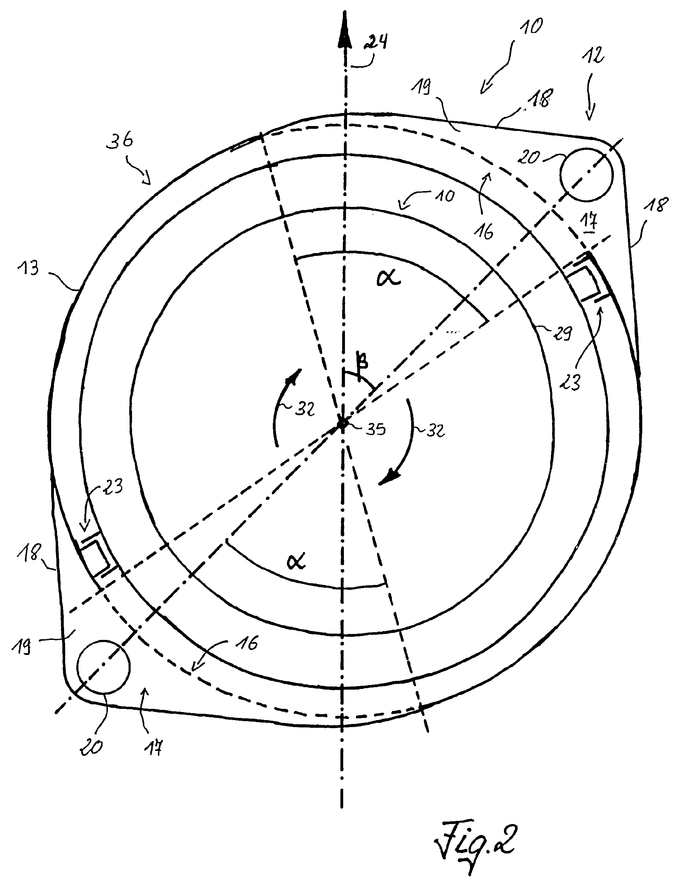

Die Fig. 1 zeigt in schematischer Darstellung ein Bodenbearbeitungsgerät 10, an dem eine Absaugvorrichtung 34 angeordnet ist. Die Absaugvorrichtung weist zwar in der Schnittdarstellung nicht sichtbare Absaugkanäle 12 auf, die in den beiden Schlauchteilen 33 münden, die zu dem Saugschlauch 25 führen. Der Saugschlauch 25 führt dann zu dem von dem Bodenarbeitungsgerät getrennten Staubsauger 21.

Das Bodenbearbeitungsgerät wird längs seiner Hauptarbeitsrichtung 24 fortbewegt und über die Führungsstange 26 vom Benutzer geführt. Das Bodenbearbeitungsgerät 10 weist den Drehteller 28 auf, der mit den Arbeitsmitteln 31 über die Bodenfläche 11 streicht und dort Oberflächenmaterial abträgt. Der Drehteller 28 wird über einen elektrischen Antrieb 30 angetrieben. Nach außen hin wird der Drehteller 28 durch das Gehäuse 29 abgeschlossen, wobei zwischen dem Gehäuse 29 und der Bodenfläche ein Spalt 34 gegeben ist.

Um das Bodenbearbeitungsgerät und sein Gehäuse 29 herum ist der Luftleitring 13 angeordnet, der mit seinen Bürsten 14 auf der Bodenfläche 11 aufsteht. Um den Luftleitring 13 herum ist noch der Dichtring 15 ausgebildet. Es kann sich bei dem Dichtring 15 beispielsweise um eine Gummilippe oder ähnliches handeln. Es muß sich um ein aus einem luftdichten Material gebildeter Gegenstand handeln, der in der Lage ist, sich an die Bodenfläche 11 anzuschmiegen. Es kann sich dabei auch um eine Komponente eines Klettverschlußbandes handeln, wobei die andere Komponente des Klettverschlußbandes vorzugsweise an der Außenseite des Luftleitrings 23 und außenseitig an den Wandungen 18 angeordnet ist. Um das außenseitig an den Wandungen 18 und dem Luftleitring 13 angeordneten Komponente des Klettverschlusses handelt es sich vorzugsweise um das Hakenband, während das verfilzte Band mit seinem relativ steif ausgebildeten Tragmaterial als Dichtring 15 dient.

Zwischen dem Luftleitring 13 und dem Gehäuse 29 ist die Dichtmanschette 22 angeordnet. Die Dichtmanschette 22 kann über einen Spannring am Gehäuse 29 dichtend befestigt werden. Somit wird aus dem Luftleitring 13 mit seinem Dichtring 15 und den Bürsten 14, der Dichtmanschette 22 und dem Gehäuse 29 ein im wesentlichen abgeschlossener Raum über der Bodenfläche 11 gebildet, wo nur die beiden Schlauchteile 23 wegführen, die über den Saugschlauch 25 fluiddicht zum Staubsauger 21 führen, so daß eine gute Absaugung erfolgt. Damit eine stetige Luftströmung erzeugt wird, kann insbesondere wenigstens ein Teil der Kühlluft des elektrischen Antriebsmotors 30 des Bodenbearbeitungsgerätes in das Gehäuse 29 hinein ausgeblasen werden, so daß ein ständiger Druckausgleich stattfindet und eine gleichmäßige Luftströmung sichergestellt ist.

Dabei ist es vorteilhaft, wenn über die Drehung des Drehtellers 28 und die tangential erfolgende Absaugung über die Austrittsschlitze 16 im Bereich des Luftleitrings 13 innerhalb des Luftleitrings 13 ein Drall in der Strömungsrichtung erzeugt wird, der das abgetragene Oberflächenmaterial außen abführt.

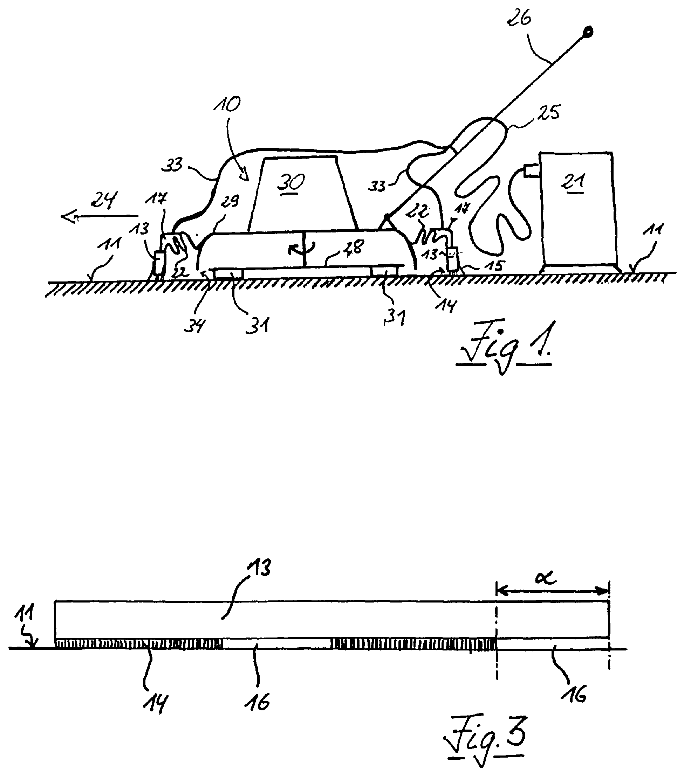

Die Fig. 2 zeigt einen Schnitt durch eine Anordnung gemäß der Fig. 1 in der Ebene des Drehtellers 28 in vertikaler Aufsicht.

Der Drehteller 28 dreht sich um die vertikal ausgerichtete Achse 35 in der durch den Pfeil gekennzeichneten Drehrichtung. Konzentrisch zu dem Drehteller erstreckt sich das Gehäuse 29 des Bodenbearbeitungsgerätes 36 in diesem Abschnitt ebenfalls in, im wesentlichen, vertikaler Ausrichtung. Um das Gehäuse 29 herum ist der Luftleitring 13 angeordnet. Über den Winkelbereich ALPHA herum sind die Austrittschlitze 16 ausgebildet, die von dem Luftleitring 13 umschlossenen Raum hin zu den Umlenkkammern 17 führen. In der zeichnerisch dargestellten Anordnung sind zwei Absaugkanäle 12 mit je einer Umlenkkammer 17 vorgesehen. Gemäß dieser Ausgestaltung ist es hierbei vorteilhaft, wenn sich der Winkelbereich ALPHA über ca. 70° hinweg erstreckt. Der Winkelbereich ALPHA wird vorzugsweise in einem Bereich zwischen 45° und 90° gewählt, bei einer Anordnung, bei der zwei Absaugvorrichtungen vorgesehen sind, ist die Auswahl eines Winkelbereichs um den Wert von 70° herum günstig.

Nach außen hin werden die Umlenkkammern 17 durch die Wandungen 18 begrenzt. Der geschlossene Linienzug, der aus den Wandungen 18 und in den wandungsfreien Bereichen aus dem Luftleitring 13 gebildet wird, wird von dem Dichtring 15 gefolgt. Der Dichtring 15 dient der staubdichten Anlage der Absaugvorrichtung 36 an der Bodenfläche 11.

Nach oben hin wird die Umlenkkammer 17 durch einen Deckel 19 abgeschlossen, durch den der Rohabschnitt 20 in vertikaler Richtung hinausführt. An den Rohabschnitt 20 können die Schlauchteile 33 angeschlossen werden, so daß eine fluidische Verbindung zu dem Staubsauger 21 herstellbar ist.

Damit die in Drehrichtung 32 des Drehtellers 28 definierte Lage der Absaugvorrichtungen sichergestellt ist, sind zwischen dem Luftleitring 13 und dem Gehäuse 29 die Führungsmittel 23 ausgebildet. Dabei müssen die Führungsmittel 23 so ausgebildet sein, daß weiterhin eine in vertikaler Richtung schwimmende Anlage des Luftleitringes 13 mit seinen Bürsten 14 auf der Bodenfläche 11 möglich ist. Es kann sich dabei insbesondere um eine Führungsschiene handeln, die einerseits ausgebildet ist und die auf der Gegenseite an entsprechend ausgebildete Führungskanten oder -nuten geführt werden, wobei sicherzustellen ist, daß keine Selbsthemmung eintritt.

Die Umlenkkammern 17, die sich über einen Winkelbereich ALPHA von ca. 70° erstrecken, sind so ausgebildet, daß sie sich in Drehrichtung 32 des Drehtellers 28 gesehen radial vertiefen. Sind über die Austrittsschlitze 16 fluidisch mit dem von dem Luftleitring 13 umschlossenen Raum verbunden. Am in Drehrichtung 32 hinteren Ende der Austrittsschlitze 16 befindet sich der Rohrabschnitt 20 der Umlenkkammer 17. Besonders vorteilhaft sind Ausgestaltungen, bei denen das hintere Ende des Austrittschlitzes 16 in radialer Richtung gesehen mit dem hinteren Ende des Rohrabschnittes 20 zusammentrifft. Dabei liegen die beiden Rohrabschnitte 20 und somit auch die beiden Austrittsschlitze 16 einander diametral gegenüber, so daß Absaugvorrichtungen gebildet sind, die auf diametral gegenüberliegenden Seiten des Bodenbearbeitungsgerätes angeordnet sind. Dabei wird eine möglichst weitgehende Bearbeitung der Bodenfläche 11 auch an Rändern ermöglicht, wenn der Durchmesser des Luftleitringes 13 möglichst wenig größer ist als der Außendurchmesser des Gehäuses 29 des Bodenbearbeitungsgerätes 10.

Eine vorteilhafte Anordnung der Führungsschlitze 16 ist dann gegeben, wenn in Drehrichtung, oder wie in der Skizze dargestellt auch entgegen der Drehrichtung 32 des Drehtellers 28 ein Winkel BETA von ca. 45° zwischen den Austrittsschlitzen (Lage des Rohrabschnittes) und der Hauptarbeitsrichtung 24 gegeben ist. Dieser Winkel BETA ist unter anderem deshalb vorteilhaft, weil sich dann die Rohrabschnitte 20 in einem Bereich befinden, in dem sie weder seitlich noch nach vorne weit über die Außenkontur des Luftleitrings 13 hinausragen.

Es ist möglich, insbesondere unterhalb der Rohrabschnitte 20, Luftleitbleche anzubringen, die die Luftströmung aus ihrer wesentlichen, durch die Führungsschlitze 16 tangential herausströmenden Richtung in die Vertikale umlenkt und für eine gute Führung des abgetragenen Oberflächenmaterials zu den Rohrabschnitten 20 hinsorgt.

Die Gestaltung des Luftleitringes ist in schematischer Darstellung auch noch in der Fig. 3 dargestellt. Die Fig. 3 zeigt dabei den Luftleitring 13 über einen Winkelbereich von 360°. Der Luftleitring erstreckt sich über eine gewisse Länge und bildet ansonsten einen Ring um das Gehäuse 29 herum. Die beiden äußeren Enden der Darstellung treffen sich also in einer realen Anordnung. Unterhalb des Luftleitrings 13 sind die Bürsten 14 angeordnet, mittels derer das Luftleitblech 13 auf der Bodenfläche 11 abgestützt wird. Die Bürsten 14 sorgen also für die Führung des Luftleitbleches 13 über der Bodenfläche 11 in vertikaler Richtung. Als Austrittschlitze 16 sind zwei bürstenfreie Abschnitte vorgesehen, die sich über den Winkelbereich ALPHA erstrecken.

## Patentansprüche

1. Absaugvorrichtung für Bodenbearbeitungsgeräte, insbesondere für Einscheiben-Bodenbearbeitungsgeräte, wobei eine Absaugung von abgetragenem Oberflächenmaterial über wenigstens zwei Absaugkanäle durchgeführt wird, **dadurch gekennzeichnet, daß** die Absaugkanäle (12) auf diametral gegenüberliegenden Seiten des Bodenbearbeitungsgerätes (10) angeordnet sind.

2. Absaugvorrichtung (36) nach Anspruch 1, **dadurch gekennzeichnet, daß** für die Absaugvorrichtung (36) ein bezüglich dem Gehäuse (29) des Bodenbearbeitungsgerätes (10) in vertikaler Richtung schwimmend gehaltener Luftleitring (13) vorgesehen ist, der vorzugsweise dichtend an der Bodenfläche (11) anliegt.

3. Absaugvorrichtung (36) nach Anspruch 2, **dadurch gekennzeichnet, daß** zur dichtenden Anlage des Luftleitrings (13) auf der Bodenfläche (11) ein die Aufstandsfläche des Luftleitrings (13) auf der Bodenfläche (11) bildender Bürstenring sowie ein außenseitig an der Absaugvorrichtung (36) angeordneter Dichtring (15) ausgebildet ist, wobei der Dichtring (15) vorzugsweise als textile Materialbahn, insbesondere als eine der beiden Komponenten eines Klettverschlusses ausgebildet ist.

4. Absaugvorrichtung (36) nach Anspruch 2 oder 3, **dadurch gekennzeichnet, daß** am Luftleitring (13) die Absaugkanäle (12) in sich radial gesehen über einen Winkelbereich des Arbeitskreises des Bodenbearbeitungsgerätes (10) erstreckende und zu jeweils außerhalb des Luftleitrings (13) ausgebildeten Umlenkkammern (17) führende Austrittsschlitze (16) münden, wobei der Winkelbereich vorzugsweise jeweils zwischen 45° und 90° liegt und insbesondere ungefähr 70° beträgt.

5. Absaugvorrichtung (36) nach Anspruch 4, **dadurch gekennzeichnet, daß** die Austrittsschlitze (16) in Vertikalrichtung gesehen nur wenige Millimeter hoch und vorzugsweise spaltförmig ausgebildet sind, wobei der Austrittsschlitz (16) insbesondere ein bürstenfreier Abschnitt des Luftleitringes (13) ist und die Höhe des Austrittsschlitzes (16) im Bereich des Luftleitringes (13) vorzugsweise der Höhe der Bürsten (14) im wesentlichen entspricht.

6. Absaugvorrichtung (36) nach Anspruch 4 oder 5, **dadurch gekennzeichnet, daß** die Umlenkkammer in Drehrichtung (32) eines Drehtellers (28) des Bodenbearbeitungsgerätes (10) sich radial vertiefend und vorzugsweise im wesentlichen dreiecksförmig ausgebildet ist, wobei jeweils ein Schenkel der Dreiecksform durch den Austrittsschlitz (16) gebildet ist und die an beiden anderen Schenkel eine Wandung (18) vorgesehen ist, die dichtend an der Bodenfläche (11) anliegt, wozu insbesondere die umlaufende textile Materialbahn dient.

7. Absaugvorrichtung (36) nach Anspruch 6, **dadurch gekennzeichnet, daß** die radiale Tiefe der Umlenkkammer (17) im tiefsten Punkt dem Durchmesser eines von der Umlenkkammer (17) vertikal abragenden Rohrabschnittes (20) entspricht und in Drehrichtung des Drehtellers (28) im hintersten Punkt des Austrittsschlitzes (16) ausgebildet ist.

8. Absaugvorrichtung (36) nach einem der vorstehenden Ansprüche, **dadurch gekennzeichnet, daß** die Absaugung durch einen vom Bodenbearbeitungsgerät (10) getrennten Staubsauger (21) erfolgt, wobei ein Saugschlauch (25) vom Staubsauger (21) zum Bodenbearbeitungsgerät (10) führt und sich dort in die Absaugkanäle (12) aufteilt von denen jeweils einer über den Rohrabschnitt (20) fluidisch mit dem Austrittsschlitz (16) verbunden ist.

9. Absaugvorrichtung (36) nach einem der Ansprüche 2 bis 8, **dadurch gekennzeichnet, daß** zwischen dem Luftleitring (13) und dem Gehäuse (29) des Bodenbearbeitungsgerätes (10) eine Dichtmanschette (22) vorgesehen ist, die mittels einem Spannverschluß dichtend an dem Gehäuse (29) des Bodenbearbeitungsgerätes (10) gehalten wird und vorzugsweise die schwimmende Lagerung des Luftleitringes (13) am Gehäuse (29) bildet.

10. Absaugvorrichtung (36) nach einem der Ansprüche 2 bis 9, **dadurch gekennzeichnet, daß** zwischen dem Gehäuse (29) des Bodenbearbeitungsgerätes (10) und dem Luftleitring (13) Führungsmittel (23) ausgebildet sind, die in Drehrichtung um die Hochachse (35) des Bodenbearbeitungsgerätes (10) eine definierte Lage zwischen Absaugkanal (12) und Hauptarbeitsrichtung (24) des Bodenbearbeitungsgerätes (10) herstellt, wobei die Verbindungslinie der beiden Absaugkanäle (12) vorzugsweise wenigstens ungefähr einen Winkel um ca. 45° zur Hauptarbeitsrichtung des Bodenbearbeitungsgerätes aufweist.
